# EUROPEAN PATENT APPLICATION

(11) **EP 0 647 416 A1**
(43) Date of publication of application: **12.04.1995**
(21) Application number: 93830442.5
(22) Date of filing: 03.11.1993
(51) Int. Cl.: A46B 9/06, A46B 13/00, A46B 5/06, B60S 3/06

(54) **Improvement bristled roller for motor vehicle automatic washing systems**

(30) Priority: 05.10.1993 IT MI932118
(71) Applicant: FAVAGROSSA EDOARDO S.r.l., Roncadello di Casalmaggiore, (Cremona) (IT)
(72) Inventor: Favagrossa, Edoardo, Rocadello Di Casalmaggiore, Cremona (IT)
(74) Representative: Cicogna, Franco

(57) **Abstract**

The present invention relates to a bristle roller (1), which has been particularly designed for automatic systems for washing motor vehicles and the like, which comprises a cylindrical body on the periphery whereof there are provided a plurality of bristles (6).

The main feature of the invention is that, on the surface of the roller (1), there are provided a first region (2), extending along a first cylindrical helix and being provided with a plurality of bristles (3) arranged with a dense arrangement, and a second region (5), extending along a second cylindric helix, which is complementary to the first cylindric helix, and being provided with bristles (3) which are less dense than those of the first region, these bristles (3) having the same length.

## Description

### BACKGROUND OF THE INVENTION

The present invention relates to a bristled roller, which has been particularly designed for automatic washing systems for washing motor vehicles and the like.

As is known, in automatic systems for washing motor vehicles and the like, there are conventionally used cylindric rollers which are provided, on their outer surface or periphery, with a plurality of bristles, having a set length, which are caused to contact the surface of the motor vehicle to be washed, in order to remove dust therefrom.

From experimental texts, Applicant has found that the above mentioned prior rollers, after a good operation starting step, are practically clogged by dust, since the latter can not be discharged to the outside and accordingly is accumulated at the bottoms or roots of the bristles.

In order to overcome the above mentioned drawbacks, there have been already designed washing rollers including different length bristles.

This approach, while being better than the prior art, is also affected by some drawbacks, mainly because of the uneven wear of the bristles.

### SUMMARY OF THE INVENTION

Accordingly, the aim of the present invention is to overcome the above drawbacks, by providing a bristled roller, which has been particularly designed for application to automatic motor vehicle washing systems and the like, which affords the possibility of easily removing dust during its operation.

Within the scope of the above mentioned aim, a main object of the present invention is to provide such a washing roller the bristles of which are worn in an even manner, thereby holding unaltered for a long time the efficiency of the roller.

Another object of the present invention is to provide such a washing roller which, owing to its specifically designed construction, is very reliable and safe in operation.

Yet another object of the present invention is to provide such a washing roller which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a bristled roller, particularly designed for automatic washing systems for washing motor vehicles and the like, comprising a cylindric body on the surface of which there are provided a plurality of bristles, characterized in that said roller further comprises, on its surface, a first region extending along a first cylindric helix, including dense bristles and a second region, extending along a second cylindric helix, complementary to said first cylindric helix and including bristles which are less dense than those of the first region and have the same length of said bristles of said first region.

### BRIEF DESCRIPTION OF THE DRAWINGS

Further characteristics and advantages of the present invention will become more apparent hereinafter from the following preferred, though not exclusive, embodiments of a bristled roller, which has been particularly designed for automatic washing systems for washing motor vehicles and the like, and which is illustrated, by way of an indicative, but not limitative, example, in the figures of the accompanying drawings where:
Figure 1 illustrates schematically a roller according to the present invention used in a motor vehicle washing system;
Figure 2 illustrates modular elements for supporting the bristles of the roller; and

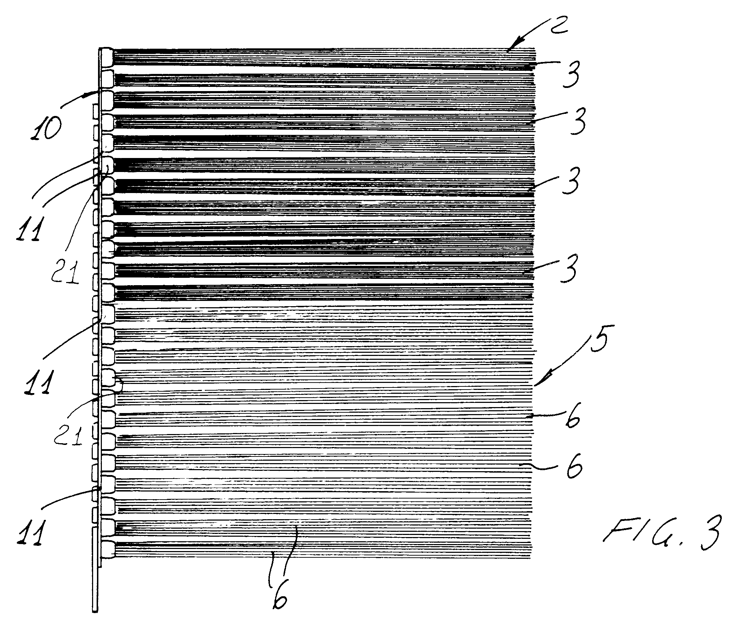

Figure 3 is a cross-sectional view illustrating the arrangement of the roller bristles.

### DESCRIPTION OF THE PREFERRED EMBODIMENT

With reference to the number references of the above mentioned figures, the bristled roller, which has been particularly designed for application in automatic washing systems for washing motor vehicles, according to the present invention, comprises a cylindric body, generally indicated at the reference number 1, on the outer surface whereof there are provided a plurality of bristles.

The main feature of the invention is that, on the surface of the roller 1, there is provided a first region 2, which extends along a first cylindric helix, and on which there are provided a plurality of bristles 3 arranged with a comparatively dense arrangement.

On the roller 1 there is moreover provided a second region 5, also extending along a cylindric helix which is complementary to the first cylindric helix, so as to fully cover the outer surface of the roller.

The second cylindric helix region 5 is provided with a plurality of bristles 6 which are arranged with a less dense arrangement than the bristles of the first region and having the same length as said bristles of said first region.

Thus, on the surface of the roller, there is formed a spiral pattern, comprising denser bristles and less dense bristles which, as the roller is operated, provides the possibility of conveying dust to the less dense bristle regions, thereby causing dust to be automatically ejected to the outside.

This same result can also be obtained by using, for the first region, bristles having a diameter greater than the diameter of the bristles provided on the second region or, if desired, and according to a further embodiment, it is possible to provide in the first region bristles having a greater stiffness and, in the second region, bristles having a smaller stiffness.

Thus, also in this embodiment, there is formed a spiral pattern of the bristles of the first region and those of the second region and, owing to the alternated arrangement thus formed on the outer surface of the roller, the bristles will define a path therethrough the dust can be automatically ejected.

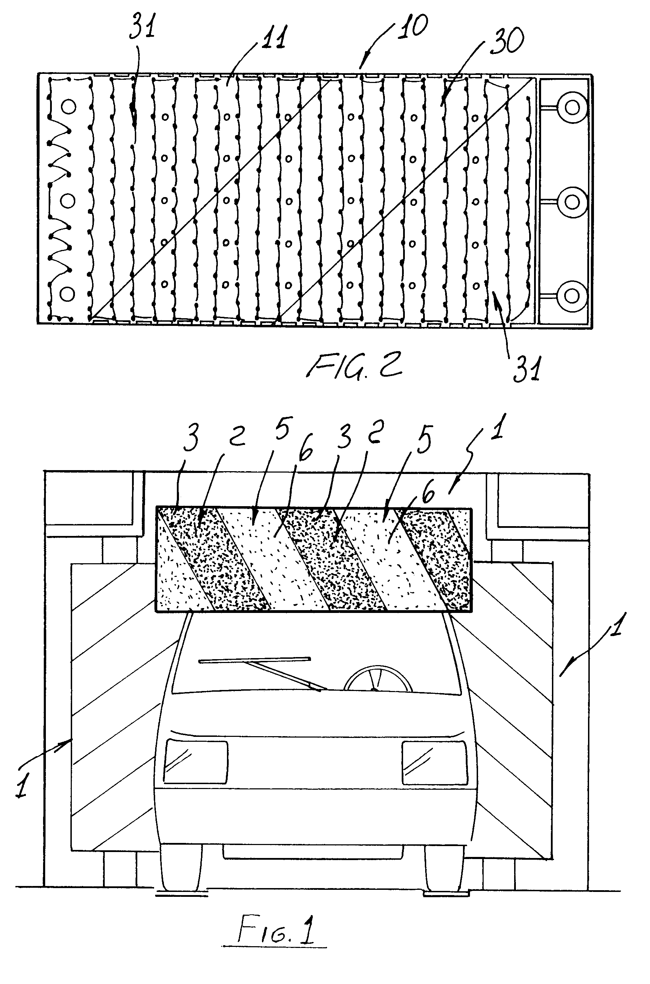

Advantageously, the roller is made of modular elements, which have been shown in Figure 2 and indicated at the reference number 10 which, practically, comprise plate like elements 11, made of a flexible material, such as rubber or the like, which include a plurality of seats 21 for engaging therein the several bristles set or assemblies.

In order to provide the alternated arrangement, on the modular elements there is provided a diamond shaped central region, indicated at the reference number 30, in which there is provided a first region near which there are provided triangular portions 31 forming the second region.

This plate-like element is folded on itself, according to a cylindrical arrangement, thereby providing a slanted strip which, by combining with the slanted strips of the adjoining modular elements, will provide a helix configuration of the two regions, including related bristles of two different types.

From the above disclosure it should be apparent that the invention fully achieves the intended aim and objects.

In particular, it should be apparent that an improved bristled roller has been provided, in which are formed spiral like paths, comprising denser bristles, or bristles having a greater cross section, or more stiffen bristles, with respect to another region, which is provided with less dense bristles, or bristles having a smaller diameter, or more flexible bristles, thereby, on the outer surface of the roller, while using bristles having all the same length, there are provided paths facilitating the ejecting of the dust which, otherwise, would tend to build-in on the roller if conventional bristles would be used all having the above disclosed like characteristics.

The invention, as disclosed, is susceptible to several modifications and variations, all of which will come within the scope of the inventive idea.

Moreover, all of the details can be replaced by other technically equivalent elements.

In practicing the invention, the used materials, as well as the contingent size and shapes, provided that they are compatible to the intended use, can be any according to requirements.

## Claims

1. A bristled roller, particularly designed for automatic washing systems for washing motor vehicles and the like, comprising a cylindric body on the surface of which there are provided a plurality of bristles, characterized in that said roller further comprises, on its surface, a first region extending along a first cylindric helix, including dense bristles and a second region, extending along a second cylindric helix, complementary to said first cylindric helix and including bristles which are less dense than those of the first region and have the same length of said bristles of said first region.

2. A bristled roller, specifically designed for automatic washing systems for motor vehicles and the like, comprising a cylindric body on the surface whereof there are provided a plurality of bristles, characterized in that said roller comprises, on the surface thereof, a first region extending along a cylindric helix, and including bristles having a larger cross-section, and a second region, extending along a second cylindric helix, complementary to the first cylindric helix, and including bristles of smaller cross-section, the bristles of said first and second regions having the same length.

3. A bristled roller, specifically designed for automatic washing system for washing motor vehicles and the like, comprising a roller cylindric body on the surface of which there are provided a plurality of bristles, characterized in that said roller further comprises, on its said surface, a first region extending along a first cylindric helix, including a plurality of bristles having a greater stiffness than that of the bristles of the second region, extending along a second cylindric helix complementary to the first cylindric helix, the bristles of said first and second regions having the same length.

4. A bristled roller according to one or more of the preceding claims, characterized in that said bristles are supported by modular elements provided for application to said roller body and including a first diamond like region with the first plurality of bristles, adjoining triangular regions with a second plurality of bristles, and in that said modular element can be folded in order to provide an annular pattern defining, by arranging the modular elements adjoining one another on said roller body, a cylindric helix pattern.
